# FASCICULE DE BREVET EUROPEEN

(11) **EP 1 938 718 B1**
(45) Date de publication et mention de la délivrance du brevet: **01.09.2010**
(21) Numéro de dépôt: 07291610.9
(22) Date de dépôt: 21.12.2007
(51) Int. Cl.: A47J 27/09

(54) **APPAREIL DE CUISSON SOUS PRESSION DE CONSTRUCTION AMÉLIORÉE ET PROCÉDÉ DE FABRICATION CORRESPONDANT**
DRUCKKOCHGERÄT IN VERBESSERTER BAUWEISE UND ENTSPRECHENDES HERSTELLUNGSVERFAHREN
PRESSURE-COOKING DEVICE WITH IMPROVED CONSTRUCTION AND CORRESPONDING MANUFACTURING METHOD

(30) Priorité: 28.12.2006 FR 0611474
(43) Date de publication de la demande: 02.07.2008
(73) Titulaire: SEB S.A., 69132 Ecully Cedex (FR)
(72) Inventeur: Chameroy, Eric, 21260 Veronnes (FR); Seurat Guiochet, Claire Marie-Aurore, 21490 Bretigny (FR)
(74) Mandataire: Martin, Didier Roland Valéry

(56) Documents cités:
- EP-A1- 0 736 282
- DE-A1- 3 010 205
- US-A- 2 595 236

## Description

La présente invention se rapporte au domaine technique général des appareils de cuisson d'aliments, notamment de nature domestique, destinés à former une enceinte de cuisson hermétique au sein de laquelle sont cuits les aliments sous pression de vapeur.

La présente invention concerne plus particulièrement un appareil de cuisson sous pression à couvercle rentrant comportant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,
- et un moyen de sécurité à l'ouverture conçu pour empêcher le moyen de commande d'atteindre sa deuxième position tant que la pression régnant dans l'enceinte est supérieure à une valeur prédéterminée.

La présente invention concerne également un procédé de fabrication d'un appareil de cuisson sous pression comportant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,
- et un moyen de sécurité à l'ouverture conçu pour empêcher le moyen de commande d'atteindre sa deuxième position tant que la pression régnant dans l'enceinte est supérieure à une valeur prédéterminée.

Les appareils de cuisson sous pression, en particulier à usage domestique, du genre autocuiseur, sont bien connus dans l'art antérieur.

Le document DE3010205A décrit un tel appareil.

De tels appareils comprennent généralement une cuve et un couvercle destiné à être rapporté sur la cuve pour former une enceinte de cuisson hermétiquement close au sein de laquelle sont placés les aliments à cuire. L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercle sur la cuve.

On connaît en particulier des appareils de cuisson sous pression mettant en oeuvre:
- une cuve constituée d'un fond à partir et à la périphérie duquel s'élève une paroi latérale se terminant par un bord rentrant qui lui-même s'étend, à partir de la paroi latérale, de façon centripète vers l'intérieur de la cuve ; ledit bord rentrant délimite une ouverture d'accès à l'intérieur de la cuve et présente une face interne située en regard de l'intérieur de la cuve ;
- et un couvercle destiné à être introduit à l'intérieur de la cuve, sous la face interne du bord rentrant, pour venir ensuite être hermétiquement plaqué contre ladite face interne, réalisant ainsi avec la cuve une enceinte de cuisson étanche.

De tels appareils sont habituellement désignés dans le domaine technique sous l'appellation « *autocuiseurs à couvercle rentrant* », dans la mesure où ils mettent en oeuvre un couvercle qui doit d'abord être rentré dans la cuve avant de venir en contact étanche avec le rebord supérieur centripète de cette dernière.

Il existe de surcroît différentes technologies d'autocuiseurs à couvercle rentrant.

On connaît ainsi les autocuiseurs « *à trou d'homme* », qui mettent en oeuvre d'une part une cuve dont le bord supérieur rentrant délimite une ouverture ovale et d'autre part un couvercle de forme conjuguée ovale.

Cette conjugaison de formes ovales permet d'introduire entièrement le couvercle à l'intérieur de la cuve, puis, une fois qu'il est positionné sous le bord rentrant centripète, de l'aligner avec l'ouverture de cuve pour qu'il vienne se plaquer de manière étanche contre ledit bord rentrant.

La conception de ces appareils « *à trou d'homme »* interdit bien entendu par nature l'utilisation de couvercles circulaires.

Il existe toutefois des autocuiseurs à couvercle rentrant permettant la mise en oeuvre de couvercles circulaires. Ces appareils sont généralement connus sous l'appellation « *autocuiseurs à couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connaît ainsi un autocuiseur à couvercle flexible comprenant une cuve dont le bord rentrant délimite une ouverture de cuve circulaire et un couvercle obtenu à partir d'un flan métallique circulaire roulé. Dans sa configuration de repos, le couvercle présente une forme de disque « *roulé* », c'est à dire cintré, qui lui permet d'être introduit au sein de la cuve sous le bord rentrant. Dans sa configuration déformée le couvercle présente une forme de disque sensiblement plat, qui lui permet de venir en appui continu et uniforme contre la face interne du bord rentrant, de façon à former une enceinte étanche. A cet effet, le bord rentrant de la cuve est équipé, dans la zone de contact avec le couvercle, d'un joint d'étanchéité annulaire. Cet appareil à couvercle flexible connu est également doté d'une part d'un moyen de commande du déplacement du couvercle comprenant un levier monté pivotant sur une fourche solidaire du couvercle et d'autre part d'un étrier monté librement mobile relativement à la fourche et destiné à venir en appui contre la cuve, à l'extérieur de cette dernière, au-dessus du bord rentrant centripète. Le levier prend appui sur l'étrier par l'intermédiaire d'une came pour exercer un effort de traction sur le centre du couvercle permettant de rapprocher le couvercle de l'étrier.

Le fonctionnement de cet autocuiseur connu est le suivant.

Le couvercle, dans sa configuration de repos, est introduit à l'intérieur de la cuve sous le bord rentrant de cette dernière, tandis que l'étrier vient en appui sur et contre la cuve, au-dessus dudit bord rentrant.

L'utilisateur actionne alors le levier en rotation ce qui a pour effet d'exercer sur le centre du couvercle un effort de rapprochement du couvercle et de l'étrier, ce dernier restant fixe en position. Le couvercle vient alors en appui contre et sous le bord rentrant de la cuve et se déforme en flexion jusqu'à atteindre sa configuration déformée, dans laquelle sa périphérie est uniformément plaquée contre le bord rentrant de la cuve, ce qui permet de réaliser une enceinte de cuisson étanche. L'utilisateur soumet ensuite l'enceinte de cuisson étanche ainsi formée à une source de chaleur, de manière à augmenter la température et la pression régnant au sein de l'enceinte et cuire les aliments présents dans l'enceinte sous pression de vapeur.

De plus, afin de prévenir toute ouverture intempestive de l'enceinte pendant le processus de cuisson, ce qui pourrait conduire à un échappement brutal du couvercle avec toutes les conséquences désastreuses qui pourraient s'ensuivre, il est connu d'équiper le couvercle de cet appareil de l'art antérieur d'un moyen de sécurité à l'ouverture. Un tel moyen est conçu pour bloquer le levier en position lorsque la pression régnant à l'intérieur de l'enceinte excède un niveau prédéterminé de sécurité. Ce moyen de sécurité à l'ouverture comprend un doigt de sécurité monté à coulissement vertical sur le couvercle. Tant que la pression régnant à l'intérieur de l'enceinte est inférieure ou égale au niveau prédéterminé, le doigt reste en position basse sous l'effet de son propre poids. Dès que la pression régnant dans l'enceinte excède le niveau prédéterminé de sécurité, le doigt monte et vient s'introduire dans un logement directement ménagé dans le levier. Lorsque le doigt est introduit dans le logement, il exerce une action de blocage mécanique qui empêche la rotation du levier, et donc l'ouverture du couvercle.

Ces appareils connus, s'ils donnent généralement satisfaction, n'en présentent pas moins un certain nombre d'inconvénients.

En premier lieu, la conception et la construction de ces appareils connus ne permettent de vérifier le bon fonctionnement des fonctions d'utilisation (ouverture/fermeture du couvercle) et de sécurité (sécurité à l'ouverture) de l'appareil qu'une fois l'ensemble des pièces montées sur le couvercle. En d'autres termes, la vérification du bon fonctionnement du système d'ouverture/fermeture et/ou du moyen de sécurité à l'ouverture ne peut être réalisé que sur le produit fini, entièrement monté et assemblé.

Cela signifie que si un défaut de fonctionnement est effectivement détecté, non seulement certaines opérations de montage et d'assemblage auront été réalisées inutilement, mais il sera en outre nécessaire de procéder à un démontage des pièces incriminées, ce qui occasionne bien entendu un surcoût.

De plus, la fabrication de ces autocuiseurs connus de l'art antérieur s'avère complexe et difficile à organiser sur le plan industriel car elle met en oeuvre le montage, sur un élément lourd et encombrant (le couvercle) relevant de techniques métallurgiques lourdes (découpage, emboutissage, poinçonnage, roulage) d'une multitude d'éléments de petites tailles et de faibles masses relevant de techniques (plasturgie, micromécanique, micro-assemblage) qui n'ont rien de commun avec le formage métallique.

Par ailleurs, les signes distinctifs d'appartenance à une gamme commerciale donnée sont généralement situés sur ou portés par les pièces montées sur le couvercle, lesquelles comprennent notamment le système d'ouverture/fermeture ou le moyen de sécurité à l'ouverture.

En effet, ces pièces se prêtent plus aisément que le couvercle lui-même, et à moindre coût, à des travails de forme, de couleur, de marquage ou encore d'aspect de surface, qui permettent d'identifier clairement un produit de manière visuelle.

Pour des raisons de standardisation industrielle, il est dès lors intéressant, pour une taille d'autocuiseur donnée, de produire un modèle unique de couvercle et de cuve, la différenciation des produits se faisant par l'apport des pièces externes montées sur le couvercle. Il s'avère donc particulièrement intéressant de pratiquer le plus tard possible les opérations industrielles de montage des pièces différenciantes sur le couvercle, afin de bénéficier d'une souplesse de stock maximale et d'ajuster au mieux la production de tel ou tel autocuiseur en fonction des demandes du marché. Une telle démarche industrielle visant à différencier les appareils en toute fin de processus, en un temps acceptable pour ne pas grever les délais de livraison, s'avère cependant extrêmement difficile, voire impossible à mettre en oeuvre dans des conditions industrielles acceptables, pour les autocuiseurs à couvercles flexibles connus compte-tenu de leur conception et construction telle qu'elle a été décrite dans ce qui précède.

Enfin, dans les appareils de cuisson à couvercle flexible de l'art antérieur, le positionnement relatif et la bonne coopération du doigt de sécurité et du levier dépendent en particulier des tolérances de fabrication du couvercle, qui sont généralement difficiles à maîtriser s'agissant de techniques lourdes de formage métallurgique.

Cela signifie qu'il est nécessaire de mettre en oeuvre des moyens industriels complexes et coûteux pour s'assurer de la coopération correcte, sur tous les couvercles, du doigt de sécurité avec le levier.

Pour les mêmes raisons, le remplacement de certaines pièces montées sur le couvercle dans le cadre d'un service après-vente peut s'avérer complexe à mettre en oeuvre, l'interchangeabilité des pièces pouvant être compromise du fait des tolérances de fabrication du couvercle. En particulier, le remplacement du doigt de sécurité de ces appareils connus nécessite, pour être certain que la fonction de sécurité à l'ouverture est parfaitement assurée, un montage soigneux et relativement délicat à effectuer.

Les objets assignés à la présente invention visent en conséquence à remédier aux différents inconvénients énumérés précédemment et à proposer un nouvel appareil de cuisson sous pression à couvercle rentrant particulièrement fiable et dont la construction est extrêmement simple, rapide et économique à mettre en oeuvre et à organiser sur le plan industriel, tout en permettant une grande souplesse de gestion des stocks et un service de réparation après-vente facilité.

Un autre objet de l'invention vise à proposer un nouvel appareil de cuisson sous pression à couvercle rentrant dont le montage est particulièrement facilité.

Un autre objet de l'invention vise à proposer un nouvel appareil de cuisson sous pression à couvercle rentrant dont la fonction de sécurité à l'ouverture repose sur des principes mécaniques connus et éprouvés.

Un autre objet de l'invention vise à proposer un nouvel appareil de cuisson sous pression à couvercle rentrant qui permet à l'utilisateur d'identifier très facilement et intuitivement les différents éléments fonctionnels présents sur son couvercle.

Un autre objet de l'invention vise à proposer un nouveau procédé de fabrication d'un appareil de cuisson sous pression à couvercle rentrant particulièrement simple, rapide et économique à mettre en oeuvre et à organiser sur le plan industriel.

Un autre objet de l'invention vise à proposer un nouveau procédé de fabrication d'un appareil de cuisson sous pression à couvercle rentrant particulièrement rationalisé sur le plan industriel.

Un autre objet de l'invention vise à proposer un nouveau procédé de fabrication d'un appareil de cuisson sous pression à couvercle rentrant particulièrement simple et rapide à mettre en oeuvre, et ce même si les tolérances de fabrication du couvercle sont importantes.

Les objets assignés à l'invention sont atteints à l'aide d'un appareil de cuisson sous pression à couvercle rentrant comportant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,
- un moyen de sécurité à l'ouverture conçu pour empêcher le moyen de commande d'atteindre sa deuxième position tant que la pression régnant dans l'enceinte est supérieure à une valeur prédéterminée,
caractérisé en ce que lesdits moyen de commande et moyen de sécurité à l'ouverture sont tous deux incorporés dans un sous-ensemble mécanique indépendant qui est lui-même rapporté et fixé sur le couvercle.

Les objets assignés à l'invention sont également atteints à l'aide d'un procédé de fabrication d'un appareil de cuisson sous pression comportant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande étant monté mobile entre au moins une première position correspondant à la position de fermeture du couvercle et une deuxième position correspondant à la position d'ouverture du couvercle,
- un moyen de sécurité à l'ouverture conçu pour empêcher le moyen de commande d'atteindre sa deuxième position tant que la pression régnant dans l'enceinte est supérieure à une valeur prédéterminée,
ledit procédé étant caractérisé en ce qu'il comprend :
- une étape de fabrication d'un sous-ensemble, au cours de laquelle le moyen de commande de la déformation du couvercle et le moyen de sécurité à l'ouverture sont tous deux incorporés au sein d'un seul et même sous-ensemble mécanique unitaire indépendant,
- et une étape d'assemblage, au cours de laquelle ledit sous-ensemble est rapporté et fixé sur le couvercle.

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à l'invention avec son moyen de commande du déplacement du couvercle dans sa deuxième position, correspondant à l'ouverture du couvercle.
- La figure 2 illustre, selon une vue schématique en coupe, l'appareil de cuisson de la figure 1.
- La figure 3 illustre, selon une vue schématique en coupe, l'appareil de cuisson de la figure 1 avec son moyen de commande du déplacement du couvercle qui se trouve cette fois dans sa première position, correspondant à la fermeture du couvercle.
- La figure 4 illustre, selon une vue schématique en perspective, le couvercle de l'appareil illustré aux figures 1 à 3 sur lequel est rapporté et fixé le sous-ensemble mécanique incorporant le moyen de commande du déplacement du couvercle et le moyen de sécurité à l'ouverture.
- La figure 5 illustre, selon une vue en perspective de dessus, le sous-ensemble mécanique indépendant destiné à être rapporté et fixé sur le couvercle de l'appareil de cuisson illustré aux figures 1 à 4.
- La figure 6 correspond à une vue en perspective de dessous de la figure 5.
- Les figures 7 et 8 illustrent chacune, selon une vue schématique en coupe partielle, le sous-ensemble mécanique indépendant illustré aux figures 5 et 6, le moyen de commande du déplacement du couvercle se trouvant, sur la figure 8, dans une position intermédiaire entre la première et la deuxième position, tandis qu'il occupe, sur la figure 7, sa première position.
- La figure 9 représente, selon une vue éclatée, le sous-ensemble mécanique indépendant illustré aux figures 5 à 8.

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil de cuisson sous pression domestique, conçu pour une utilisation dans un contexte familial. Par souci de simplicité de description, il sera exclusivement fait référence dans ce qui suit, en relation avec les dessins annexés, à un appareil 1 constitué par un tel autocuiseur domestique, étant entendu que l'invention peut toutefois également concerner des appareils de type professionnel ou semi-professionnel.

Conformément à l'invention, l'appareil 1 comprend au moins une cuve 2 qui forme un récipient de cuisson, c'est-à-dire que ladite cuve 2 est destinée à accueillir les aliments soit directement, soit par l'intermédiaire d'un panier de cuisson (non représenté) inséré dans la cuve 2 et contenant lesdits aliments.

La cuve 2 présente par exemple, tel que cela est illustré aux figures, une symétrie de révolution selon un axe X-X'. Dans ce qui suit, l'adjectif « axial » se réfère à la direction de cet axe de symétrie X-X', direction qui s'apparente à la direction verticale lorsque l'appareil 1 est en fonctionnement normal.

Bien évidemment, la cuve 2 peut tout à fait ne pas affecter une forme de révolution (et être par exemple de forme ovale), sans pour autant que l'on sorte du cadre de l'invention.

Conformément à l'invention, l'appareil de cuisson sous pression 1 comporte également au moins un couvercle 3 destiné à coopérer avec la cuve 2 pour former avec cette dernière une enceinte de cuisson.

Selon l'invention, l'appareil de cuisson 1 est un appareil à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous le bord libre supérieur de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur, pour obtenir une enceinte de cuisson hermétiquement close. Ce principe général sous-tendant la construction et le fonctionnement des appareils de cuisson sous pression à couvercle rentrant est bien connu en tant que tel.

La cuve 2 est de manière classique fabriquée à partir d'un matériau métallique tel que de l'acide inoxydable ou de l'aluminium, et comporte un fond 2A qui affecte par exemple une forme discoïde et est éventuellement pourvu d'un assemblage composite thermo-conducteur, rapporté par exemple par frappe à chaud. Comme illustré aux figures, la cuve 2 comporte une paroi latérale 2B qui, de préférence, présente une forme annulaire et s'élève à partir et à la périphérie du fond 2A. Un bord rentrant 2C s'étend de façon centripète à partir de la paroi latérale 2B. Ce bord rentrant 2C présente une face interne 20C située en regard de l'intérieur de la cuve 2, c'est à dire orientée vers le fond 2A.

De préférence, tel que cela est illustré aux figures, la paroi latérale 2B s'étend entre une extrémité inférieure 20B reliée à la périphérie du fond 2A et une extrémité supérieure 21 B prolongée par le bord rentrant 2C, lequel converge radialement vers le centre de la cuve 2, c'est à dire en direction de l'axe X-X'. De préférence, le bord rentrant 2C comprend un tronçon sensiblement conique 21C qui s'étend dans le prolongement de la paroi latérale 2B, ledit tronçon conique 21C se terminant par un bord roulé 22C ménageant un logement destiné à accueillir un joint d'étanchéité annulaire 4, lequel vient habiller la face interne 20C du bord rentrant 2C. Le bord rentrant centripète 2C délimite une ouverture d'accès à l'intérieur de la cuve 2, par laquelle peuvent être introduits non seulement les aliments à cuire, mais également le couvercle 3.

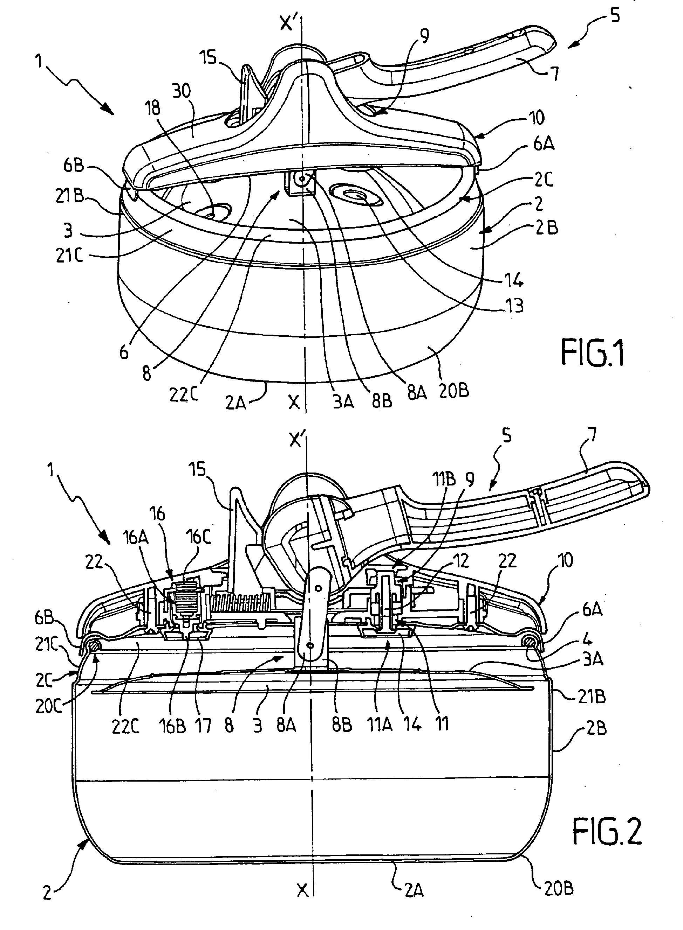

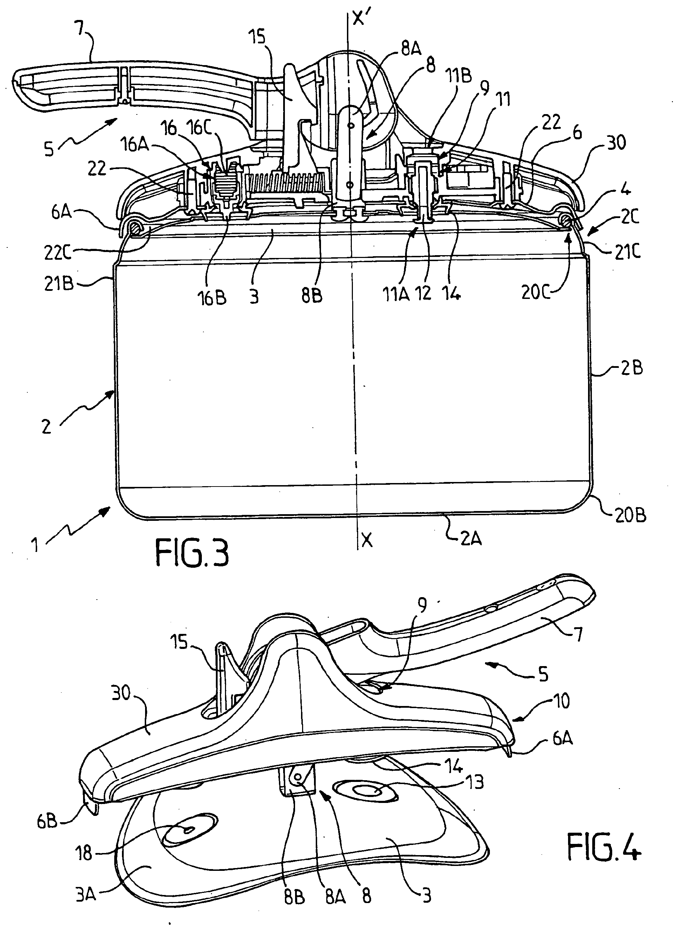

Conformément à l'invention, le couvercle 3 est conçu pour être rapporté dans la cuve 2 avec une faculté de mobilité entre au moins :
- d'une part une position de fermeture (illustrée à la figure 3) dans laquelle il forme avec la cuve 2 une enceinte de cuisson sensiblement étanche, c'est à dire suffisamment hermétique pour permettre une montée en pression en son sein,
- et d'autre part une position d'ouverture (illustrée aux figures 1 et 2), dans laquelle il permet la communication de l'intérieur de l'enceinte avec l'extérieur, de façon à ce que la pression régnant dans l'enceinte corresponde sensiblement à la pression atmosphérique.

En d'autres termes, conformément à l'invention, le couvercle 3 peut être rapporté dans la cuve 2, c'est à dire être inséré à l'intérieur de cette dernière, selon un positionnement prédéterminé, positionnement dans lequel il conserve une possibilité de se déplacer de façon contrôlée entre ses positions de fermeture et d'ouverture.

Dans le mode de réalisation illustré aux figures, lorsque le couvercle 3 se trouve en position de fermeture, il vient en contact sensiblement étanche, par sa face supérieure 3A, contre la face interne 20C du bord rentrant 2C.

Au contraire, lorsque le couvercle 3 se trouve en position d'ouverture, il se trouve à distance du bord rentrant 2C, empêchant ainsi toute montée en pression de l'enceinte. Le passage de la position d'ouverture à la position de fermeture (et vice versa) s'effectue préférentiellement par un mouvement de translation verticale du couvercle 3 de bas en haut (respectivement de haut en bas).

Dans ce qui suit, on s'attachera exclusivement, pour des raisons de simplicité de description, à décrire un autocuiseur à couvercle rentrant pourvu d'un couvercle 3 déformable, c'est-à-dire dont la forme peut être modifiée par application d'une sollicitation mécanique commandée par l'utilisateur.

L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

Conformément au mode de réalisation illustré aux figures, le couvercle 3 est donc un couvercle déformable susceptible d'évoluer entre une configuration géométrique de repos (illustrée à la figure 4) permettant l'introduction du couvercle 3 dans la cuve 2 sous la face interne 20C du bord rentrant 2C et une configuration géométrique déformée (représentée notamment à la figure 3) permettant au couvercle de venir en contact sensiblement étanche contre la face interne 20C du bord rentrant 2C, cette dernière étant préférentiellement habillée par le joint d'étanchéité 4.

Afin de permettre à l'utilisateur d'ouvrir et fermer à volonté l'enceinte de cuisson, le couvercle 3 est préférentiellement un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle, c'est à dire une forme courbe sensiblement en U (par exemple visible sur les figures 1 et 4). En d'autres termes, le couvercle 3 présente avantageusement au repos (en l'absence de sollicitation de déformation) une forme de disque cintré, qui correspond en vue de dessus à une ellipse. Grâce à cette forme gauche, ledit couvercle 3 peut être inséré à l'intérieur de la cuve 2 à travers l'orifice délimité par le bord rentrant 2C, alors que le diamètre du flan discoïde (avant cintrage) à partir duquel est constitué le couvercle 3 est supérieur à celui de l'ouverture de cuve 2. La figure 1 représente notamment le couvercle 3 alors qu'il est inséré à l'intérieur de la cuve 2, sous le bord rentrant 2C.

Conformément à l'invention, l'appareil de cuisson sous pression 1 comprend également un moyen de commande 5 du déplacement du couvercle 3 entre ses positions de fermeture et d'ouverture, ledit moyen de commande 5 étant monté mobile entre au moins une première position (illustrée notamment à la figure 3) correspondant à la position de fermeture du couvercle 3 et une deuxième position (illustrée notamment aux figures 1 et 2) correspondant à la position d'ouverture du couvercle 3.

Par exemple, dans le mode de réalisation illustré aux figures, le moyen de commande 5 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 :
- de sa position d'ouverture (illustrée aux figures 1 et 2) à sa position de fermeture (illustrée à la figure 3) par traction verticale du bas vers le haut,
- et inversement, de sa position de fermeture (illustrée à la figure 3) à sa position d'ouverture (illustrée aux figures 1 et 2) par relâchement de l'effort de traction exercé, le couvercle 3 retournant en position d'ouverture sous les effets conjugués de son retour élastique et de son propre poids.

Dans le cas, illustré aux figures, d'un autocuiseur à couvercle flexible, le moyen de commande 5 exerce une double fonction, savoir une fonction de commande du déplacement du couvercle 3 et une fonction de commande de la déformation (en flexion) du couvercle 3, ces fonctions intervenant successivement.

En effet, sous l'effet de l'effort de traction verticale exercé par le moyen de commande 5 au niveau du centre du couvercle 3, selon des modalités qui vont être expliquées plus en détails dans ce qui suit, le couvercle 3 va tout d'abord se déplacer globalement selon un trajet vertical parallèle à l'axe X-X' jusqu'à venir en butée, vers sa périphérie, contre le bord rentrant 2C, lequel est habillé sur sa face interne 20C par le joint annulaire d'étanchéité 4. L'effort de traction du bas vers le haut exercé par le moyen de commande 5 est alors poursuivi tandis que le couvercle 3 est en appui contre le bord rentrant 2C (par l'intermédiaire du joint d'étanchéité 4 interposé entre la face supérieure du couvercle 3 et la face inférieure 20C du bord rentrant 2C), ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue, sur sensiblement toute sa périphérie, le bord rentrant 2C. On obtient ainsi une enceinte de cuisson suffisamment étanche pour permettre la cuisson des aliments à une pression supérieure à la pression atmosphérique. En d'autres termes, dans le mode de réalisation illustré aux figures, le moyen de commande 5 du déplacement du couvercle 3 commande non seulement le déplacement proprement dit du couvercle 3 mais également le passage dudit couvercle de sa configuration géométrique de repos à sa configuration géométrique déformée et vice versa. Le passage d'une configuration géométrique à l'autre est donc commandé par le moyen de commande 5 du déplacement du couvercle 3.

Conformément à l'invention, l'appareil de cuisson sous pression 1 comporte en outre un moyen de sécurité à l'ouverture 9 conçu pour empêcher le moyen de commande 5 du déplacement du couvercle 3 d'atteindre sa deuxième position (correspondant à l'ouverture du couvercle 3) tant que la pression régnant dans l'enceinte est supérieure à une valeur prédéterminée, compatible avec la sécurité de l'utilisateur. En d'autres termes, le moyen de sécurité à l'ouverture 9 permet d'éviter que l'utilisateur ne puisse ouvrir l'appareil de cuisson 1 alors que la pression régnant à l'intérieur de ce dernier est suffisamment importante pour entraîner des phénomènes dangereux, tel que l'échappement brutal du couvercle ou l'éjection de matières alimentaires brûlantes.

De façon préférentielle, le moyen de sécurité à l'ouverture 9 est également conçu pour assurer une fonction de sécurité à la mauvaise fermeture. Une telle fonction de sécurité à la mauvaise fermeture consiste à ménager une communication entre l'intérieur de l'enceinte et l'extérieur suffisante pour empêcher la montée en pression de l'enceinte tant que ladite enceinte ne se trouve pas dans sa configuration fermée, avec le moyen de commande 5 du déplacement du couvercle 3 se trouvant dans sa première position (correspondant à la fermeture).

Un tel moyen 9 capable d'assurer à la fois une fonction de sécurité à l'ouverture et une fonction de sécurité à la mauvaise fermeture est bien connu dans son principe, de sorte qu'il n'apparaît pas nécessaire de détailler plus avant son principe général de fonctionnement.

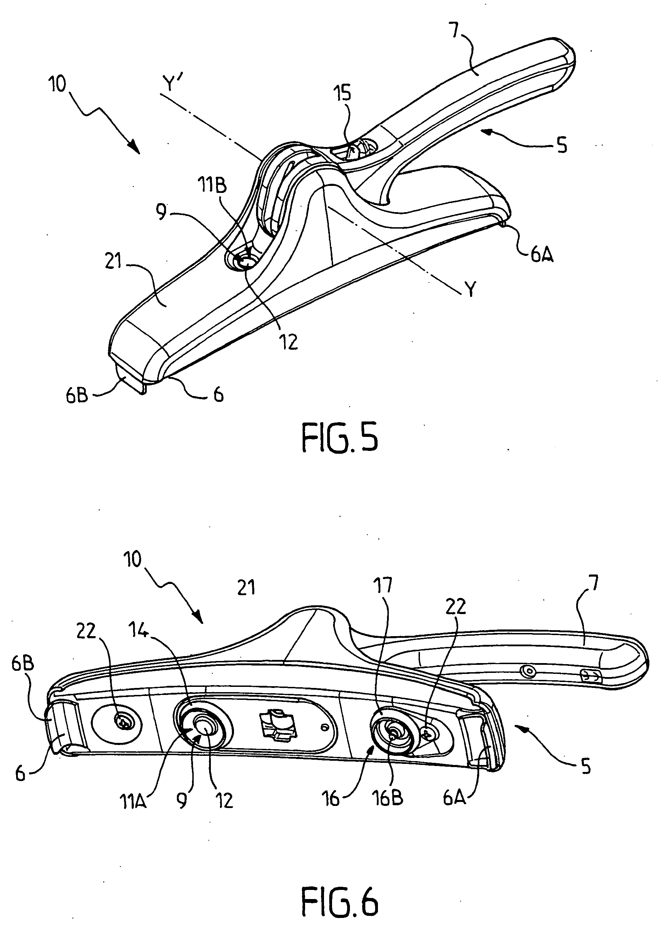

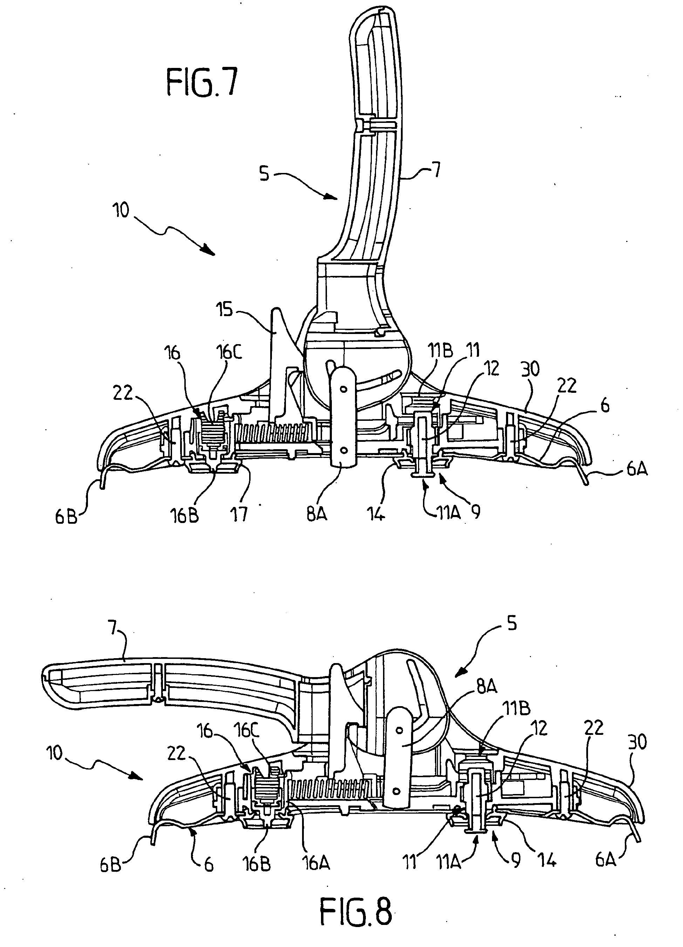

Conformément à l'invention, le moyen de commande 5 du déplacement du couvercle 3 et le moyen de sécurité à l'ouverture 9 sont tous deux incorporés dans un sous-ensemble mécanique indépendant 10 (illustré seul sur les figures 5 à 9) qui est lui-même rapporté et fixé sur le couvercle 3. En d'autres termes, le moyen de commande 5 du déplacement du couvercle 3 et le moyen de sécurité à l'ouverture 9 sont tous deux montés dans un seul et même sous-ensemble unitaire qui présente une tenue mécanique propre. Le sous-ensemble 10 forme ainsi un composant élémentaire préfabriqué conçu pour être rapporté sur le couvercle 3 et être attaché à ce dernier, de préférence à demeure.

Le sous-ensemble 10 présente avantageusement un caractère monobloc, étant entendu qu'il est cependant tout à fait envisageable qu'il soit issu lui-même de la réunion de plusieurs sous-modules sans pour autant que l'on sorte du cadre de l'invention.

Grâce à ces caractéristiques techniques, l'appareil de cuisson sous pression 1 conforme à l'invention présente les avantages suivants :
- Le bon fonctionnement du moyen de sécurité à l'ouverture 9 et de son interaction avec le moyen de commande 5 du déplacement du couvercle 3 peut être contrôlé avant que lesdits moyens 5, 9 ne soient montés sur le couvercle 3. Cela évite la mise en oeuvre d'opérations de montage sur le couvercle 3 qui pourraient s'avérer inutiles si une défaillance est finalement détectée *a posteriori.*
- Les sous-ensembles 10 incorporant le moyen de commande 5 du déplacement du couvercle 3 et le moyen de sécurité à l'ouverture 9 peuvent être fabriqués à l'avance dans un atelier spécialement adapté aux techniques dont ils relèvent (pièces plastiques et micromécanique notamment), ce qui permet de faciliter l'organisation industrielle de la fabrication.
- Grâce au principe modulaire sur lequel est basée l'invention, le sous-ensemble 10 peut être rapporté au dernier moment sur le couvercle 3, ce qui permet de facilement personnaliser au dernier moment un appareil de cuisson 1 donné, en jouant par exemple sur la couleur, la matière ou la géométrie du module formé par le sous-ensemble 10.
- Le positionnement relatif du moyen de sécurité à l'ouverture 9 et du moyen de commande 5 du déplacement du couvercle 3, positionnement qui conditionne la fiabilité de la fonction de sécurité à l'ouverture, ne dépend que des tolérances de fabrication du sous-ensemble mécanique 10 lui-même, et non des tolérances de fabrication du couvercle 3 comme cela était le cas dans l'art antérieur. Etant donné que les tolérances de fabrication du sous-ensemble mécanique 10 sont beaucoup moins importantes que celles du couvercle 3, il est possible grâce à l'invention d'obtenir un montage très précis et sûr du moyen de sécurité à l'ouverture 9 par rapport notamment au moyen de commande 5 du déplacement du couvercle 3, ce qui contribue à l'obtention d'une excellente sécurité de fonctionnement.
- Le service après-vente est facilité car, du fait de la conception modulaire retenue, l'interchangeabilité des pièces est plus aisée et leur montage est facilité.

Avantageusement, le sous-ensemble 10 est utilisé pour rapporter le couvercle 3 dans la cuve 2. A cet effet, le sous-ensemble 10 est d'une part relié mécaniquement au couvercle 3 et d'autre part est destiné à venir reposer en appui contre et sur la cuve 2. Le couvercle 3 est avantageusement monté mobile relativement au sous-ensemble 10 entre deux positions extrêmes qui, lorsque le sous-ensemble 10 repose de façon fixe et immobile contre le bord de cuve 22C (tel qu'illustré à la figure 1), correspondent respectivement aux positions d'ouverture et de fermeture. Au sens de l'invention, on considère donc que le couvercle 3 est rapporté dans la cuve 2 lorsqu'une pièce d'accostage (formée en l'occurrence par le sous-ensemble 10) reliée au couvercle 3 vient s'immobiliser en appui contre la cuve 2, le couvercle 3 se trouvant alors prépositionné au sein de la cuve 2, sous le bord rentrant 2C, avec une possibilité de se déplacer relativement à ladite pièce d'accostage et à la cuve.

Selon l'exemple de réalisation illustré aux figures, l'appareil 1 comprend un étrier 6 formant pièce d'accostage avec la cuve 2, ledit étrier 6 étant destiné à venir en appui sur le bord rentrant 2C, contre la face externe de ce dernier. L'étrier 6 est ainsi conçu pour être disposé en travers de l'ouverture de la cuve 2, de manière à venir en appui externe sur le bord rentrant 2C, en deux régions diamétralement opposées, tel que cela est illustré aux figures 1 à 3 notamment. L'étrier 6 est avantageusement formé d'une plaque métallique allongée s'étendant longitudinalement entre deux extrémités opposées pourvues chacune d'un bord tombant respectif 6A, 6B permettant d'assurer un positionnement correct, centré, de l'étrier 6 sur la cuve 2. Au sens de l'invention, on considère que le couvercle 3 est rapporté dans la cuve 2 lorsque l'étrier 6 (ou tout autre moyen équivalent) repose sur et au-dessus de la cuve 2, en prenant appui sur le bord supérieur (formé ici par le bord rentrant 2C) de la cuve 2 tel qu'illustré par exemple à la figure 1.

Le moyen de commande 5 du déplacement du couvercle 3 comprend de façon avantageuse un levier 7 mobile conçu pour être actionné manuellement par l'utilisateur.

Le levier 7 est avantageusement monté mobile relativement à l'étrier 6, au sein du sous-ensemble 10, entre au moins d'une part une première position (illustrée aux figures 3 et 5) correspondant à la première position du moyen de commande 5 (fermeture), et d'autre part une deuxième position (illustrée aux figures 1, 2 et 4) correspondant à la deuxième position du moyen de commande 5 (ouverture). De préférence, le levier 7 est monté à pivotement relativement à l'étrier 6 selon un axe de rotation Y-Y' perpendiculaire à l'axe X-X', selon des modalités constructives qui seront décrites plus en détails ci-après. Le levier 7 est également de préférence relié, par l'intermédiaire d'un système de transmission d'effort 8, au couvercle 3 et préférentiellement au centre dudit couvercle 3 pour que le pivotement du levier 7 de sa deuxième vers sa première position entraîne l'exercice d'un effort de traction vers le haut sur le centre du couvercle 3 et réciproquement.

Dans l'exemple illustré aux figures, le système de transmission d'effort 8 comprend au moins une biellette 8A dont la première extrémité est reliée à pivotement au levier 7, selon un axe de rotation parallèle à l'axe Y-Y' mais décalé par rapport à ce dernier et dont la deuxième extrémité est reliée à pivotement à une pièce d'attache 8B en forme de U solidarisée au couvercle 3, par exemple par rivetage.

L'invention n'est cependant pas limitée à un moyen de commande 5 comprenant un levier 7 rotatif actionnant un système de biellettes 8A. Il est par exemple tout à fait envisageable que le moyen de commande 5 comprenne non pas un levier mais un volant relié à une roue dentée actionnant un système de transmission d'effort à crémaillère.

Il est bien évidemment également envisageable, sans pour autant que l'on sorte du cadre de l'invention, que le moyen de commande 5 assure non pas une double fonction comme dans l'exemple illustré aux figures, mais seulement la fonction de déplacement (globale) du couvercle 3, par exemple selon un mode de réalisation correspondant à un autocuiseur à trou d'homme dans lequel le couvercle ovale vient simplement se plaquer de manière étanche contre le bord rentrant sans être ensuite déformé.

Il est également envisageable, dans le cas cette fois d'un mode de réalisation à couvercle déformable, que le moyen de commande 5 sollicite le couvercle 3 selon un autre mode de déformation que la flexion.

De préférence, le moyen de sécurité à l'ouverture 9 coopère, directement ou indirectement, avec le levier 7 pour empêcher ce dernier d'atteindre sa deuxième position (correspondant à l'ouverture) tant que la pression régnant dans l'enceinte est supérieure à la valeur prédéterminée de sécurité.

Avantageusement, le moyen de sécurité à l'ouverture 9 comprend d'une part un conduit 11 ménagé dans le sous-ensemble 10 et d'autre part un élément mobile 12 monté à coulissement au sein du conduit 11, ledit conduit 11 étant destiné à être abouché à un orifice 13 ménagé à travers le couvercle 3, lorsque le moyen de commande 5 se trouve dans sa première position (correspondant à la fermeture du couvercle 3). Plus précisément, le conduit 11 s'étend avantageusement selon la direction X-X' entre une première extrémité ouverte 11A équipée d'un joint d'étanchéité annulaire 14 et une deuxième extrémité ouverte 11 B. La première extrémité ouverte 11A est destinée à être plaquée contre l'ouverture 13 pratiquée dans l'épaisseur du couvercle 3, ledit joint d'étanchéité 14 étant interposé entre le couvercle 3 et le sous-ensemble 10 pour assurer une liaison étanche entre l'intérieur de l'enceinte de cuisson et l'intérieur du conduit 11.

L'élément mobile 12, qui est de préférence constitué par une pièce longiligne telle qu'une tige ou un doigt, est conçu pour se déplacer en translation selon la direction X-X' au sein du conduit 11. De préférence, le moyen de sécurité à l'ouverture 9 est sensible à la pression régnant au sein de l'enceinte. Par exemple, dans le mode de réalisation illustré aux figures, la position de l'élément mobile 12 au sein du conduit 11 dépend de la pression régnant dans l'enceinte, c'est à dire que l'élément 12 est conçu pour coulisser dans le conduit 11 sous l'effet de la force motrice exercée par la pression interne à l'enceinte. Ainsi, tant que la pression régnant au sein de l'enceinte est inférieure ou égalé à une valeur prédéterminée de sécurité, l'élément mobile 12 se trouve, sous l'effet de son propre poids, dans une position basse stable de butée dans laquelle d'une part il met en communication l'intérieur de l'enceinte avec l'extérieur permettant ainsi une fuite de vapeur, et d'autre part il autorise le déplacement par l'utilisateur du moyen de commande 5 et plus précisément du levier 7 de sa première position (de fermeture) à sa deuxième position (d'ouverture) et inversement. Lorsque la pression régnant au sein de l'enceinte dépasse la valeur prédéterminée de sécurité, l'élément mobile 12 est monté au sein du conduit 11 pour atteindre une deuxième position stable de butée dans laquelle d'une part il ferme la communication de l'enceinte avec l'extérieur pour permettre la montée en pression de l'enceinte et d'autre part il bloque le moyen de commande 5 du déplacement du couvercle 3 dans sa première position (correspondant à la fermeture hermétique de l'enceinte). Cette fonction de blocage peut être, selon un mode de réalisation non illustré, réalisée directement, par action directe de l'élément mobile 12 sur le levier 7. De façon alternative, elle peut également, tel que cela est illustré aux figures, être réalisée par une action indirecte de l'élément mobile 12 qui agit sur un verrou mobile 15 qui lui-même maintient le levier 7 en position de fermeture.

Avantageusement, l'appareil 1 conforme à l'invention comprend en outre une soupape de régulation de la pression régnant au sein de l'enceinte (non représentée). Cette soupape de régulation est mise en communication étanche avec l'intérieur de l'enceinte et est mobile entre au moins une position de fermeture dans laquelle elle ferme la communication de l'enceinte avec l'extérieur de l'appareil tans que la pression interne dans l'enceinte est inférieure à une pression prédéterminée de fonctionnement, et au moins une deuxième position de fuite dans laquelle elle met en communication l'intérieur de l'enceinte avec l'extérieur de l'appareil dès que la pression interne dépasse sensiblement la pression prédéterminée de fonctionnement. La soupape de régulation de pression permet ainsi de maintenir la pression régnant dans l'enceinte à un niveau sensiblement constant pendant le cycle de cuisson, en dehors des phases de montée en pression et de dépressurisation. La soupape de régulation équipant l'appareil 1 conforme à l'invention peut être de tout type bien connu de l'homme du métier, et par exemple être constitué par une soupape à poids, une soupape à ressort, et/ou une soupape à tarage variable. La soupape de régulation de la pression peut être montée directement sur le couvercle, en dehors du sous-ensemble 10. Il est cependant tout à fait envisageable que la soupape de régulation de la pression soit également incorporée dans le sous-ensemble mécanique unitaire indépendant 10.

Avantageusement, l'appareil 1 conforme à l'invention comprend en outre une soupape de sécurité à la surpression 16, ladite soupape de sécurité 16 étant avantageusement incorporée dans le sous-ensemble mécanique unitaire indépendant 10. Le principe de fonctionnement d'une telle soupape de sécurité à la surpression est bien connu en tant que tel. La soupape 16 permet de réaliser une fuite de vapeur et donc une dépressurisation de l'enceinte lorsque la pression régnant dans ladite enceinte atteint une valeur prédéterminée correspondant à un fonctionnement anormal.

De cette manière, même si la soupape de régulation de la pression est défectueuse et reste en permanence obturée, tout risque d'explosion de l'appareil 1 est écarté grâce au déclenchement de la soupape de sécurité à la surpression 16. De manière classique, la soupape de sécurité à la surpression 16 est en communication étanche avec l'intérieur de l'enceinte et est sensible à la pression régnant dans l'enceinte de cuisson. La soupape de sécurité à la surpression 16 comprend de préférence un puits 16A ménagé au sein du sous-ensemble unitaire 10 et au sein duquel est monté à coulissement un clapet mobile 16B soumis à l'effet de rappel d'un ressort 16C.

Le puits 16A, de la même manière que le conduit 11 du moyen de sécurité à l'ouverture 9, est destiné à être abouché à un orifice 18 ménagé à travers le couvercle 3, lorsque le moyen de commande 5 se trouve dans sa première position (fermeture du couvercle). Ainsi, lorsque la pression régnant dans l'enceinte excède le niveau prédéterminé de sécurité, le clapet 16B surmonte la force de rappel du ressort 16C et se déplace axialement vers le haut pour mettre en communication l'intérieur de l'enceinte avec l'extérieur. Le puits 16A s'étend selon la direction axiale X-X' entre une première extrémité ouverte équipée d'un joint d'étanchéité annulaire 17 et une seconde extrémité ouverte. La première extrémité ouverte est destinée à être plaquée contre l'ouverture 18 pratiquée à travers l'épaisseur du couvercle 3, ledit joint d'étanchéité 17 étant interposé entre le couvercle 3 et le sous-ensemble 10 pour assurer une liaison étanche entre l'intérieur de l'enceinte de cuisson et l'intérieur du puits 16A.

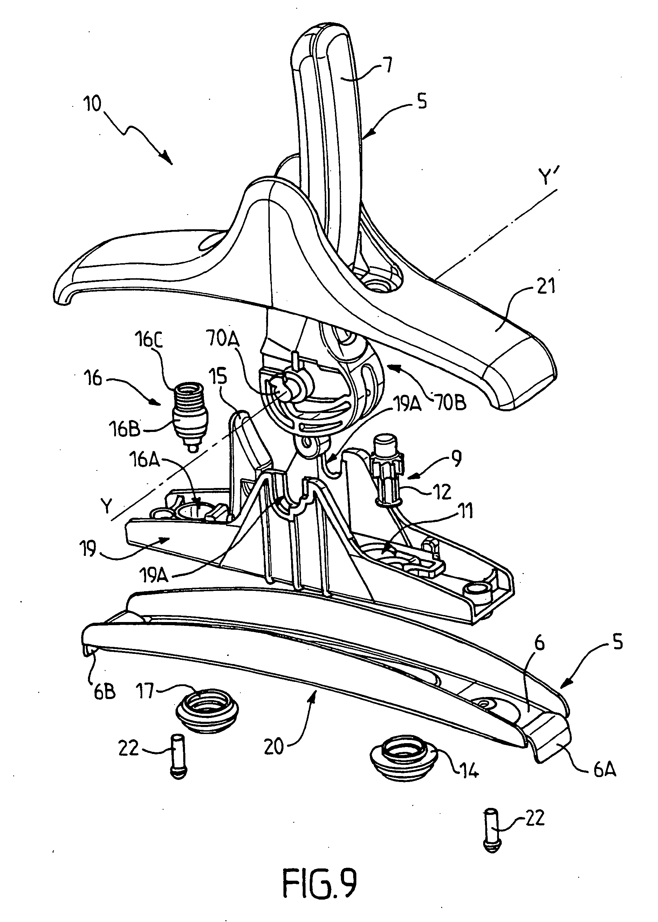

De préférence, le sous-ensemble 10 comprend, tel que cela est plus particulièrement visible sur la figure 9, une platine 19, réalisée par exemple par moulage de matière plastique.

Le conduit 11 du moyen de sécurité à l'ouverture 9 et le puits 16A de la soupape de sécurité à la surpression 16 sont avantageusement directement préformés dans la platine 19. L'ensemble des pièces mobiles correspondant au moyen de commande 5 du déplacement du couvercle 3, au moyen de sécurité à l'ouverture 9, à la soupape de sécurité à la surpression 16 et au verrou 15 sont directement montés sur la platine 19. Le levier 7 est en particulier monté à pivotement sur la platine 19 par l'intermédiaire d'une fourche 19A, qui de préférence vient de matière avec la platine 19, et sur laquelle vient tourillonner le levier 7 par l'intermédiaire d'ergots 70A, 70B formant arbres de rotation pour le levier 7. La platine 19 équipée de toutes les pièces mobiles évoquées précédemment est elle-même incluse dans un boîtier dont la base 20 est constituée par l'étrier 6 tandis que la partie supérieure est constituée par un capot 30 rapporté sur l'étrier 6 et fixé à ce dernier par l'intermédiaire de vis 22 traversant la platine 19 grâce à des passages ménagés en son sein à cet effet. L'étrier 6 est lui-même pourvu d'orifices permettant de laisser saillir les joints d'étanchéité 14, 17 équipant respectivement le conduit 11 et le puits 16A. L'étrier 6 est également pourvu d'un orifice permettant de laisser passer la (ou les) biellettes 8A, biellette 8A dont l'une des extrémités est reliée au levier 7, de manière excentrée par rapport au centre de rotation dudit levier, tandis que l'autre extrémité est assujettie au couvercle 3, par l'intermédiaire de la pièce d'attache 8B elle-même solidaire du centre du couvercle 3.

L'appareil de cuisson 1 conforme à l'invention comprend en définitive deux entités distinctes constituées par la cuve 2 d'une part et l'assemblage du sous-ensemble 10 et du couvercle 3 d'autre part (cet assemblage est illustré à la figure 4).

Le fonctionnement de l'appareil de cuisson 1 illustré aux figures est le suivant.

La cuve 2 est posée sur une source de chauffe, constituée par exemple par une plaque de cuisson. Des aliments sont disposés au sein de la cuve 2, éventuellement dans un panier de cuisson inséré lui-même dans la cuve 2. L'utilisateur saisit ensuite l'entité constituée par l'assemblage du sous-ensemble 10 et du couvercle 3, en attrapant manuellement le levier 7 qui fait en l'occurrence office de poignée de préhension. Il insère le couvercle 3 à l'intérieur de la cuve 2, sous le bord rentrant 2C. L'étrier 6 se trouve quant à lui à l'extérieur de la cuve 2 et repose sur la face externe du bord rentrant 2C.

L'appareil de cuisson 1 se trouve à cet instant dans la configuration illustrée aux figures 1 et 2. L'utilisateur déplace ensuite le levier 7 en rotation selon une course angulaire en sens anti-horaire (défini par rapport aux figures 2, 3 et 7) correspondant environ à un demi-cercle, et par exemple de l'ordre de 165°, de sa deuxième position (d'ouverture) à sa première position (de fermeture). Cela a pour effet de transmettre, par l'intermédiaire de la biellette 8A, un effort de traction vers le haut sur le centre du couvercle 3, l'étrier 6 restant en permanence appuyé sur le bord de la cuve 2. Cet effort de traction a pour effet dans un premier temps de déplacer le couvercle 3 vers le haut, puis de le déformer par flexion une fois que le couvercle est venu en appui contre le joint 4 équipant le bord rentrant 2C. Simultanément, les joints d'étanchéité 14, 17 équipant respectivement le conduit 11 et le puits 16A, viennent en appui contre la face supérieure du couvercle 3 de manière à englober l'orifice correspondant 13, 18 ménagé dans ledit couvercle 3 et permettre ainsi une mise en communication étanche de l'intérieur de l'enceinte avec respectivement le conduit 11 d'une part et le puits 16A d'autre part. A cet effet, les diamètres respectifs des joints d'étanchéité annulaires 14, 17 sont suffisamment grands pour venir englober systématiquement l'intégralité du trou correspondant 13, 18 ménagé dans le couvercle 3, malgré les dispersions de positionnement résultant des tolérances de fabrication. L'appareil de cuisson sous pression 1 conforme à l'invention se trouve alors dans la configuration illustrée à la figure 3.

A la fin du cycle de cuisson, une fois l'intérieur de l'enceinte ramené à pression atmosphérique par tout moyen connu, l'utilisateur libère le levier 7 de l'emprise du verrou 15 puis déplace le levier 7 selon une course angulaire horaire (défini par rapport aux figures 2, 3 et 7) pour le ramener de sa première position (de fermeture) à sa deuxième position (d'ouverture). Cela a pour effet de déplacer le couvercle vers le bas, tout en provoquant une relaxation de l'effort de flexion. Le couvercle 3 retrouve alors sa forme initiale en l'absence de sollicitation mécanique, forme initiale dont le caractère courbe (visible notamment sur la figure 4) lui permet d'être aisément extrait hors de la cuve 2.

L'invention concerne également un procédé de fabrication d'un appareil de cuisson sous pression 1 conforme à l'invention, et par exemple identique à celui décrit dans ce qui précède.

L'invention concerne ainsi un procédé de fabrication d'un appareil de cuisson sous pression 1 comportant au moins :
- une cuve 2 et un couvercle 3 conçu pour être rapporté dans la cuve 2 avec une faculté de mobilité entre au moins d'une part une position de fermeture dans laquelle il forme avec la cuve 2 une enceinte de cuisson sensiblement étanche, et d'autre part une position d'ouverture dans laquelle il permet la communication de l'intérieur de l'enceinte avec l'extérieur,
- un moyen de commande 5 du déplacement du couvercle 3 entre ses positions de fermeture et d'ouverture, ledit moyen de commande 5 étant monté mobile entre au moins une première position correspondant à la position de fermeture du couvercle 3 et une deuxième position correspondant à la position d'ouverture du couvercle 3,
- un moyen de sécurité à l'ouverture 9 conçu pour empêcher le moyen de commande 5 d'atteindre sa deuxième position tant que la pression régnant dans l'enceinte est supérieure à une valeur prédéterminée.

Conformément à l'invention, le procédé de fabrication comprend une étape de fabrication d'un sous-ensemble 10, au cours de laquelle le moyen de commande du déplacement du couvercle 3 et le moyen de sécurité à l'ouverture 9 sont tous deux incorporés (montés) au sein d'un sous-ensemble mécanique indépendant 10. En d'autres termes, au cours de l'étape de fabrication du sous-ensemble 10, le moyen de commande du déplacement du couvercle 3 et le moyen de sécurité à l'ouverture 9 sont incorporés au sein d'un seul et même sous-ensemble unitaire, comme cela a été décrit dans ce qui précède.

Le procédé conforme à l'invention comprend également une étape d'assemblage, au cours de laquelle le sous-ensemble 10 est rapporté et fixé sur le couvercle 3, comme cela a déjà été évoqué dans ce qui précède. De préférence, l'étape d'assemblage est postérieure à l'étape de fabrication du sous-ensemble 10.

Avantageusement, l'étape de fabrication du sous-ensemble 10 comprend :
- une sous-étape de réalisation d'un conduit 11 ménagé dans le sous-ensemble 10,
- ainsi qu'une sous-étape de montage à coulissement d'un élément mobile 12 au sein dudit conduit 11,
ledit procédé comprenant également une étape de réalisation d'un orifice 13 à travers le couvercle 3, le conduit 11 étant destiné à être abouché audit orifice 13 lorsque le moyen de commande 5 du déplacement du couvercle 3 se trouve dans sa première position (de fermeture).

De façon préférentielle, l'étape de fabrication du sous-ensemble 10 comprend également une sous-étape de montage, au sein dudit sous-ensemble 10, d'une soupape de sécurité à la surpression 16, de telle sorte que ladite soupape de sécurité à la surpression 16 soit embarquée au sein du sous-ensemble 10, comme cela a déjà été décrit plus en détails dans ce qui précède.

## Revendications

1. Appareil de cuisson sous pression (1) à couvercle rentrant comportant au moins :
- une cuve (2) et un couvercle (3) conçu pour être rapporté dans la cuve (2) avec une faculté de mobilité entre au moins d'une part une position de fermeture dans laquelle il forme avec la cuve (2) une enceinte de cuisson sensiblement étanche, et d'autre part une position d'ouverture dans laquelle il permet la communication de l'intérieur de l'enceinte avec l'extérieur,
- un moyen de commande (5) du déplacement du couvercle (3) entre ses positions de fermeture et d'ouverture, ledit moyen de commande (5) étant monté mobile entre au moins une première position correspondant à la position de fermeture du couvercle (3) et une deuxième position correspondant à la position d'ouverture du couvercle (3),
- un moyen de sécurité à l'ouverture (9) conçu pour empêcher le moyen de commande (5) d'atteindre sa deuxième position tant que la pression régnant dans l'enceinte est supérieure à une valeur prédéterminée,
**caractérisé en ce que** lesdits moyen de commande (5) et moyen de sécurité à l'ouverture (9) sont tous deux incorporés dans un sous-ensemble mécanique indépendant (10) qui est lui-même rapporté et fixé sur le couvercle (3).

2. Appareil (1) selon la revendication 1 **caractérisé en ce que** le moyen de sécurité à l'ouverture (9) comprend un conduit (11) ménagé dans le sous-ensemble (10) et un élément mobile (12) monté à coulissement au sein dudit conduit (11), ledit conduit (11) étant destiné à être abouché à un orifice (13) ménagé à travers le couvercle (3) lorsque le moyen de commande (5) se trouve dans sa première position.

3. Appareil (1) selon la revendication 1 ou 2 **caractérisé en ce que** le moyen de commande (5) comprend un levier (7) conçu pour être actionné manuellement par l'utilisateur, ledit levier (7) étant monté mobile au sein du sous-ensemble (10) entre une première position correspondant à la première position du moyen de commande (5) et une deuxième position correspondant à la deuxième position du moyen de commande (5), ledit moyen de sécurité à l'ouverture (9) coopérant avec ledit levier (7) pour empêcher ce dernier d'atteindre sa deuxième position tant que la pression régnant dans l'enceinte est supérieure à ladite valeur prédéterminée.

4. Appareil (1) selon l'une des revendications 1 à 3 **caractérisé en ce qu'**il comprend une soupape de régulation de la pression régnant au sein de l'enceinte.

5. Appareil (1) selon l'une des revendications 1 à 4 **caractérisé en ce qu'**il comprend une soupape de sécurité à la surpression (16), ladite soupape de sécurité (16) étant incorporée dans ledit sous-ensemble mécanique unitaire indépendant (10).

6. Appareil (1) selon l'une des revendications 1 à 5 **caractérisé en ce que** la cuve (2) comprend une paroi latérale (2B) à partir dé laquelle s'étend de façon centripète un bord rentrant (2C) présentant une face interne (20C), le couvercle (3) étant un couvercle déformable susceptible d'évoluer entre une configuration géométrique de repos permettant l'introduction du couvercle (3) dans la cuve (2) sous la face interne (20C) et une configuration géométrique déformée permettant au couvercle (3) de venir en contact sensiblement étanche contre ladite face interne (20C), le passage d'une configuration à l'autre étant commandé par le moyen de commande (5) du déplacement du couvercle (3).

7. Procédé de fabrication d'un appareil (1) de cuisson sous pression comportant au moins :
- une cuve (2) et un couvercle (3) conçu pour être rapporté dans la cuve (2) avec une faculté de mobilité entre au moins d'une part une position de fermeture dans laquelle il forme avec la cuve (2) une enceinte de cuisson sensiblement étanche, et d'autre part une position d'ouverture dans laquelle il permet la communication de l'intérieur de l'enceinte avec l'extérieur,
- un moyen de commande (5) du déplacement du couvercle (3) entre ses positions de fermeture et d'ouverture, ledit moyen de commande (5) étant monté mobile entre au moins une première position correspondant à la position de fermeture du couvercle (3) et une deuxième position correspondant à la position d'ouverture du couvercle (3),
- un moyen de sécurité à l'ouverture (9) conçu pour empêcher le moyen de commande (5) d'atteindre sa deuxième position tant que la pression régnant dans l'enceinte est supérieure à une valeur prédéterminée,
ledit procédé étant **caractérisé en ce qu'**il comprend :
- une étape de fabrication d'un sous-ensemble (10), au cours de laquelle le moyen de commande (5) du déplacement du couvercle (3) et le moyen de sécurité à l'ouverture (9) sont tous deux incorporés au sein d'un sous-ensemble mécanique unitaire indépendant (10),
- et une étape d'assemblage, au cours de laquelle ledit sous-ensemble (10) est rapporté et fixé sur le couvercle (3).

8. Procédé selon la revendication 7 **caractérisé en ce que** ladite étape d'assemblage est postérieure à ladite étape de fabrication du sous-ensemble.

9. Procédé selon la revendication 7 ou 8 **caractérisé en ce que** l'étape de fabrication du sous-ensemble comprend :
- une sous-étape de réalisation d'un conduit (11) ménagé dans le sous-ensemble (10),
- une sous-étape de montage à coulissement d'un élément mobile (12) au sein dudit conduit (11),
ledit procédé comprenant également une étape de réalisation d'un orifice (13) à travers le couvercle (3), le conduit (11) étant destiné à être abouché audit orifice (13) lorsque le moyen de commande (5) du déplacement du couvercle (3) se trouve dans sa première position.

10. Procédé selon l'une des revendications 7 à 9 **caractérisé en ce que** l'étape dé fabrication du sous-ensemble (10) comprend une sous-étape de montage au sein dudit sous-ensemble (10) d'une soupape de sécurité à la surpression (16).

## Claims

1. A pressure-cooking utensil (1) having an internal-mount lid and comprising at least:
- a bowl (2) and a lid (3) designed to be mounted in the bowl (2) to be moveable between at least a closed position in which it co-operates with the bowl (2) to form a substantially leaktight cooking vessel, and an open position in which it makes it possible for the inside of the vessel to communicate with the outside;
- control means (5) for causing the lid (3) to move between its closed position and its open position, said control means (5) being mounted to move between at least a first position corresponding to the closed position of the lid (3) and a second position corresponding to the open position of the lid (3); and
- opening safety means (9) designed to prevent the control means (5) from reaching their second position so long as the pressure prevailing inside the vessel is greater than a predetermined value;
**characterized in that** said control means (5) and said opening safety means (9) are both incorporated in an independent mechanical subassembly (10) which is itself mounted and fastened on the lid (3).

2. A utensil (1) according to claim 1, **characterized in that** the opening safety means (9) comprise a duct (11) provided in the subassembly (10) and a moving element (12) slidably received in said duct (11), said duct (11) being designed to be abutted into register with an orifice (13) provided through the lid (3) when the control means (5) are in their first position.

3. A utensil (1) according to claim 1 or claim 2, **characterized in that** the control means (5) comprise a lever (7) designed to be actuated manually by the user, said lever (7) being mounted to move in the subassembly (10) between a first position corresponding to the first position of the control means (5) and a second position corresponding to the second position of the control means (5), said opening safety means (9) co-operating with said lever (7) to prevent said lever from reaching its second position so long as the pressure prevailing inside the vessel is greater than said predetermined value.

4. A utensil (1) according to any one of claims 1 to 3, **characterized in that** it further comprises a pressure regulator valve for regulating the pressure prevailing inside the vessel.

5. A utensil (1) according to any one of claims 1 to 4, **characterized in that** it further comprises a pressure-relief safety valve (16), said pressure-relief safety valve (16) being incorporated in said independent single-unit mechanical subassembly (10).

6. A utensil (1) according to any one of claims 1 to 5, **characterized in that** the bowl (2) has a side wall (2B) from which an inwardly extending rim (2C) extends that has an inside face (20C), the lid (3) being a deformable lid suitable for going between a rest geometrical position enabling the lid (3) to be inserted into the bowl (2) under the inside face (20C) and a deformed geometrical configuration enabling the lid (3) to come into substantially leaktight contact against said inside face (20C), going from one configuration to the other being caused by the control means (5) for causing the lid (3) to move.

7. A method of manufacturing a pressure-cooking utensil (1) comprising at least:
- a bowl (2) and a lid (3) designed to be mounted in the bowl (2) to be moveable between at least a closed position in which it co-operates with the bowl (2) to form a substantially leaktight cooking vessel, and an open position in which it makes it possible for the inside of the vessel to communicate with the outside;
- control means (5) for causing the lid (3) to move between its closed position and its open position, said control means (5) being mounted to move between at least a first position corresponding to the closed position of the lid (3) and a second position corresponding to the open position of the lid (3); and
- opening safety means (9) designed to prevent the control means (5) from reaching their second position so long as the pressure prevailing inside the vessel is greater than a predetermined value;
said method being **characterized in that** it comprises:
- a step of manufacturing a subassembly (10), during which the control means (5) for causing the lid (3) to move and the opening safety means (9) are both incorporated into an independent single-unit mechanical subassembly (10); and
- an assembly step, during which said subassembly (10) is mounted and fastened on the lid (3).

8. A method according to claim 7, **characterized in that** said assembly step is subsequent to said step of manufacturing the subassembly.

9. A method according to claim 7 or claim 8, **characterized in that** the step of manufacturing the subassembly further comprises:
- a sub-step of forming a duct (11) provided in the subassembly (10); and
- a sub-step of slidably mounting a moving element (12) in said duct (11);
said method further comprising a step of forming an orifice (13) through the lid (3), the duct (11) being designed to be abutted into register with said orifice (13) when the control means (5) for causing the lid (3) to be moved find themselves in their first position.

10. A method according to any one of claims 7 to 9, **characterized in that** the step of manufacturing the subassembly (10) further comprises a sub-step of mounting a pressure-relief safety valve (16) in said subassembly (10).

## Patentansprüche

1. Druckkochgerät (1) mit eindringendem Deckel, das mindestens Folgendes aufweist:
- einen Behälter (2) und einen Deckel (3), der ausgelegt ist, um in dem Behälter (2) mit der Möglichkeit des Bewegens zwischen mindestens einerseits einer Schließposition, in der er mit dem Behälter (2) einen im Wesentlichen dichten Gareinschluss bildet, und andererseits einer Öffnungsposition, in der er die Kommunikation des Inneren des Einschlusses mit der Außenseite erlaubt, eingesetzt zu werden,
- ein Mittel (5) zum Steuern der Bewegung des Deckels (3) zwischen seiner Schließ- und seiner Öffnungsposition, wobei das Steuermittel (5) mindestens zwischen einer ersten Position, die der Schließposition des Deckels (3) entspricht, und einer zweiten Position, die der Öffnungsposition des Deckels (3) entspricht, beweglich montiert ist,
- ein Öffnungs-Sicherheitsmittel (9), das ausgelegt ist, um das Steuermittel (5) daran zu hindern, seine zweite Stellung zu erreichen, solange der Druck, der in dem Einschluss herrscht, größer ist als ein vorbestimmter Wert,
**dadurch gekennzeichnet, dass** das Steuermittel (5) und das Öffnungs-Sicherheitsmittel (9) beide in eine unabhängige mechanische Unterbaugruppe (10) eingebaut sind, die selbst an den Deckel (3) angebaut und an ihm befestigt ist.

2. Gerät (1) nach Anspruch 1, **dadurch gekennzeichnet, dass** das Öffnungs-Sicherheitsmittel (9) eine Leitung (11) aufweist, die in der Unterbaugruppe (10) vorgesehen ist, und ein bewegliches Element (12), das gleitend innerhalb der Leitung (11) angebracht ist, wobei die Leitung (11) dazu bestimmt ist, in eine Öffnung (13) zu münden, die durch den Deckel (3) hindurch vorgesehen ist, wenn sich das Steuermittel (5) in seiner ersten Position befindet.

3. Gerät (1) nach Anspruch 1 oder 2, **dadurch gekennzeichnet, dass** das Steuermittel (5) einen Hebel (7) aufweist, der ausgelegt ist, um vom Benutzer manuell betätigt zu werden, wobei der Hebel (7) innerhalb der Unterbaugruppe (10) zwischen einer ersten Position, die der ersten Position des Steuermittels (5) entspricht, und einer zweiten Position, die der zweiten Position des Steuermittels (5) entspricht, beweglich angebracht ist, wobei das Öffnungs-Sicherheitsmittel (9) mit dem Hebel (7) zusammenwirkt, um diesen Letzteren daran zu hindern, seine zweite Position zu erreichen, solange der Druck, der in dem Einschluss herrscht, größer ist als der vorbestimmte Wert.

4. Gerät (1) nach einem der Ansprüche 1 bis 3, **dadurch gekennzeichnet, dass** es ein Ventil zur Regulierung des Drucks, der innerhalb des Einschlusses herrscht, aufweist.

5. Gerät (1) nach einem der Ansprüche 1 bis 4, **dadurch gekennzeichnet, dass** es ein Überdruck-Sicherheitsventil (16) aufweist, wobei das Sicherheitsventil (16) in die unabhängige einzelne mechanische Unterbaugruppe (10) eingebaut ist.

6. Gerät (1) nach einem der Ansprüche 1 bis 5, **dadurch gekennzeichnet, dass** der Behälter (2) eine Seitenwand (2B) aufweist, von welcher ausgehend sich zentripetal ein zurückspringender Rand (2C) erstreckt, der eine Innenseite (20C) aufweist, wobei der Deckel (3) ein verformbarer Deckel ist, der sich zwischen einer geometrischen Ruhekonfiguration, die das Einfügen des Deckels (3) in den Behälter (2) unter die Innenseite (20C) erlaubt, und einer geometrisch verformten Konfiguration bewegen kann, die es dem Deckel (3) erlaubt, in im wesentlichen dichten Kontakt gegen die Innenseite (20C) zu kommen, wobei der Übergang von einer Konfiguration zu der anderen durch das Steuermittel (5) zum Bewegen des Deckels (3) gesteuert wird.

7. Verfahren zum Herstellen eines Druckkochgeräts (1), das mindestens Folgendes aufweist:
- einen Behälter (2) und einen Deckel (3), der ausgelegt ist, um in einem Behälter (2) mit einer Möglichkeit des Bewegens zwischen mindestens einerseits einer Schließposition, in der er mit dem Behälter (2) einen im Wesentlichen dichten Gareinschluss bildet, und andererseits einer Öffnungsposition, in der er die Kommunikation des Inneren des Einschlusses mit der Außenseite erlaubt, eingesetzt zu werden,
- ein Mittel zum Steuern (5) der Bewegung des Deckels (3) zwischen seiner Schließ- und Öffnungsposition, wobei das Steuermittel (5) zwischen mindestens einer ersten Position, die der Schließposition des Deckels (3) entspricht, und einer zweiten Position, die der Öffnungsposition des Deckels (3) entspricht, beweglich angebracht ist,
- ein Öffnungs-Sicherheitsmittel (9), das ausgelegt ist, um das Steuermittel (5) daran zu hindern, seine zweite Position zu erreichen, solange der Druck, der in dem Einschluss herrscht, größer ist als ein vorbestimmter Wert,
wobei das Verfahren **dadurch gekennzeichnet ist, dass** es Folgendes aufweist:
- einen Schritt des Herstellens einer Unterbaugruppe (10), bei dem das Mittel zum Steuern (5) der Bewegung des Deckels (3) und das Öffnungs-Sicherheitsmittel (9) beide innerhalb einer unabhängigen einzelnen mechanischen Unterbaugruppe (10) eingebaut sind,
- und einen Montageschritt, bei dem die Unterbaugruppe (10) an den Deckel (3) angebaut und befestigt wird.

8. Verfahren nach Anspruch 7, **dadurch gekennzeichnet, dass** der Montageschritt nach dem Herstellungsschritt der Unterbaugruppe erfolgt.

9. Verfahren nach Anspruch 7 oder 8, **dadurch gekennzeichnet, dass** der Herstellungsschritt der Unterbaugruppe Folgendes aufweist:
- einen Unterschritt zum Herstellen einer Leitung (11), die in der Unterbaugruppe (10) vorgesehen ist,
- einen Unterschritt zum gleitenden Anbringen eines beweglichen Elements (12) innerhalb der Leitung (11),
wobei das Verfahren auch einen Schritt zur Erzeugung einer Öffnung (13) durch den Deckel (3) hindurch aufweist, wobei die Leitung (11) dazu bestimmt ist, in die Öffnung (13) zu münden, wenn sich das Mittel zum Steuern (5) der Bewegung des Deckels (3) in seiner ersten Position befindet.

10. Verfahren nach einem der Ansprüche 7 bis 9, **dadurch gekennzeichnet, dass** der Herstellungsschritt der Unterbaugruppe (10) einen Unterschritt zur Montage eines Überdruck-Sicherheitsventils (16) innerhalb der Unterbaugruppe (10) aufweist.
